# FASCICULE DE BREVET EUROPEEN

(11) **EP 2 642 324 B1**
(45) Date de publication et mention de la délivrance du brevet: **20.07.2016**
(21) Numéro de dépôt: 13156958.4
(22) Date de dépôt: 27.02.2013
(51) Int. Cl.: G02B 6/44

(54) **Câble optique de liaison à un réseau général**
Optisches Anschlusskabel für ein allgemeines Netz
Optical cable for connection to a utility grid

(30) Priorité: 19.03.2012 FR 1252427
(43) Date de publication de la demande: 25.09.2013
(73) Titulaire: Nexans, 75008 Paris (FR)
(72) Inventeur: Helvenstein, Réal, 7022 HARMIGNES (BE)
(74) Mandataire: Lenne, Laurence

(56) Documents cités:
- WO-A1-90/00823
- GB-A- 2 017 955

## Description

L'invention concerne un câble optique de liaison à un réseau général.

Elle concerne plus précisément un câble comprenant un câble optique dit primaire comprenant au moins un module de fibres optiques, au moins une fibre optique dite de raccordement et une enveloppe de protection entourant le dit câble primaire et ladite fibre optique.

Un tel câble est décrit dans le document de brevet EP 1 972 978.

Le câble primaire comporte au moins un module de fibres optiques connecté à au moins une fibre de raccordement.

Selon ce document, l'enveloppe de protection est de section transversale circulaire et l'aire de la somme des sections des fibres optiques de raccordement est inférieure à 75% de l'aire de la section de la surface interne de l'enveloppe de protection, de telle sorte que ces fibres sont agencées à l'intérieur de l'enveloppe de protection de manière à disposer d'un jeu suffisant pour faciliter leur extraction.

En effet, cette extraction destinée à un raccordement à un point d'alimentation chez un abonné ou une boîte de dérivation, est réalisée en pratiquant une première ouverture dans l'enveloppe de protection et à sectionner la fibre optique sélectionnée à proximité de cette première ouverture. Une seconde ouverture distante de la première ouverture est ensuite pratiquée dans l'enveloppe de protection et une portion de la fibre optique sélectionnée est prélevée par tirage au travers de la seconde ouverture. Cette portion de fibre optique est insérée dans une micro-conduite et amenée au point d'alimentation.

Si le jeu précisé ci-dessus facilite cette opération d'extraction, il s'avère que la réalisation des deux ouvertures affaiblit la tenue mécanique de l'enveloppe de protection et du câble et est susceptible de perturber la transmission optique des fibres optiques actives.

Par ailleurs, un câble de télécommunication comprenant une première fibre optique, au moins une deuxième fibre optique et une enveloppe de protection entourant les fibres optiques et constituée de plusieurs sous-enveloppes, contenant chacune une fibre optique, ces sous-enveloppes étant mécaniquement raccordées, est connu par exemple du document de brevet GB 2 017 955.

L'invention résout les problèmes précédents et propose un câble comprenant un câble optique primaire comprenant au moins un module de fibres optiques, constitué d'un élément central de support mécanique entouré d'une pluralité de tubes contenant chacun un module de fibres optiques, au moins une fibre optique dite de raccordement et une enveloppe de protection entourant ledit câble primaire et ladite fibre optique, ladite enveloppe de protection étant constitué de deux sous-enveloppes, dont une première sous-enveloppe contient ledit câble optique primaire et la seconde sous-enveloppe contient ladite fibre optique de raccordement, ledit câble optique étant un câble optique dit primaire comprenant une pluralité de modules de fibres optiques de connexion à un réseau général et le câble comportant dans la seconde sous-enveloppe une pluralité de fibres optiques de raccordement d'abonnés audit câble primaire, caractérisé en ce que lesdites deux sous-enveloppes sont partiellement ouvertes longitudinalement et directement reliées à leur ouverture, la première sous-enveloppe présentant sur sa face interne un écran fermé.

Une extraction de la ou des fibres optique(s) de raccordement est ainsi effectuée par ouverture uniquement de la seconde sous-enveloppe, sans risque de perturbation de transmission du câble optique primaire et sans affaiblissement de sa tenue mécanique.

Le câble optique primaire est avantageusement un câble optique ADSS (de l'anglais « All-dielectric Self-Supporting Optical Cable ») et constitue un support mécanique pour les fibres de raccordement.

La dite fibre optique de raccordement peut être contenue dans un tube ou être disposée de façon libre dans ladite seconde sous-enveloppe.

La première sous-enveloppe présente avantageusement sur sa face interne un écran de fibres d'aramide.

D'autres fibres de renforcement peuvent également être utilisées.

L'invention est décrite ci-après plus en détail à l'aide de figures ne représentant que des modes de réalisation préféré de l'invention.
La figure 1 est une vue en coupe transversale d'un câble selon un premier mode de réalisation de l'invention.
La figure 2 est une vue en coupe transversale d'un câble selon un deuxième mode de réalisation de l'invention.
La figure 3 est une vue en coupe transversale d'un câble selon un second mode de réalisation de l'invention.
La figure 4 est une vue schématique illustrant des raccordements à un réseau général, au moyen d'un câble conforme à l'invention.

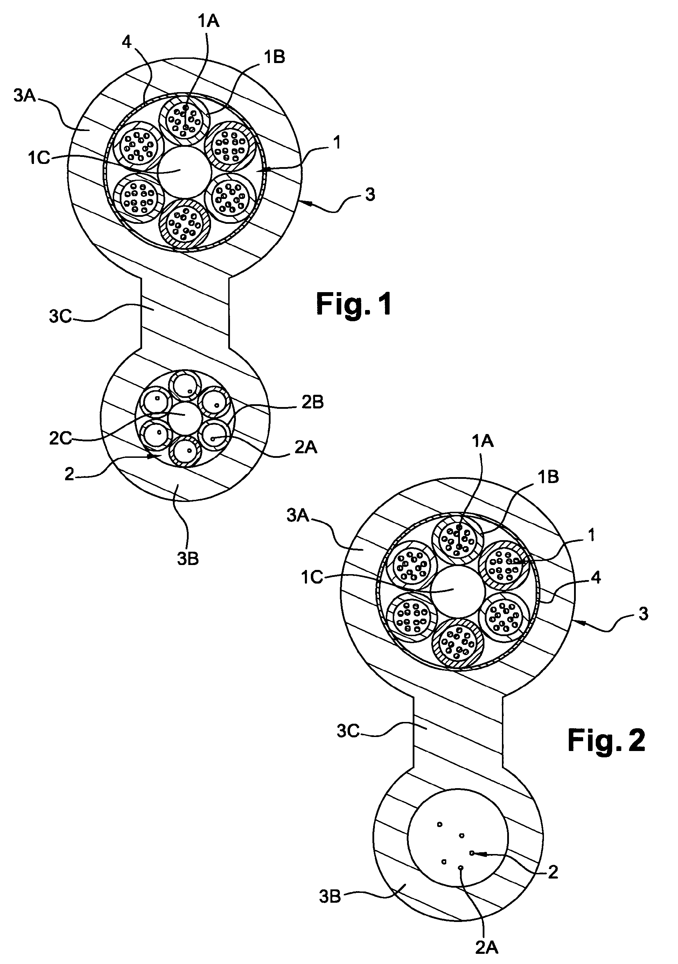

Comme représenté sur la figures 1 et 2, un câble comprend un câble optique dit primaire 1 comprenant au moins un module de fibres optiques 1A entourées d'une gaine 1B, de préférence un tube, au moins une fibre optique dite de raccordement 2 et une enveloppe de protection 3 de préférence en polyoléfine, en polyester ou en polyamide, entourant le câble primaire et ladite fibre optique.

Le câble optique primaire 1 est avantageusement un câble ADSS, constitué d'un élément central de support mécanique 1C constitué de préférence de résine renforcé de fibres et entouré des tubes 1B en polymère toronnés contenant chacun un module de fibres optiques 1A noyées dans un gel. Un écran de fibres d'aramide 4 entoure ce câble primaire 1.

L'enveloppe de protection 3 est constitué de deux sous-enveloppes de section transversale fermée, de préférence circulaire, dont une première sous-enveloppe 3A contient le câble optique primaire 1 et la seconde sous-enveloppe 3B contient la fibre optique de raccordement 2, ces deux sous-enveloppes étant mécaniquement raccordées.

De préférence, les deux sous-enveloppes 3A, 3B sont mécaniquement raccordées par un tronçon commun longitudinal 3C et avantageusement, comme représenté, ce tronçon 3C est un tronçon droit disposé dans un plan contenant l'axe longitudinal de chaque sous-enveloppe.

De préférence, une pluralité de fibres optiques de raccordement 2A est contenue par la seconde sous-enveloppe 3B.

Selon le premier mode de réalisation représenté sur la figure 1, chaque fibre optique de raccordement 2A est contenue dans un tube 2B en polymère et l'ensemble de ces tubes est supporté par un jonc central 2C de maintien mécanique de préférence de résine renforcé de fibres.

Selon le deuxième mode de réalisation représenté sur la figure 2, chaque fibre optique de raccordement 2A est disposée de façon libre dans la seconde sous-enveloppe 3B.

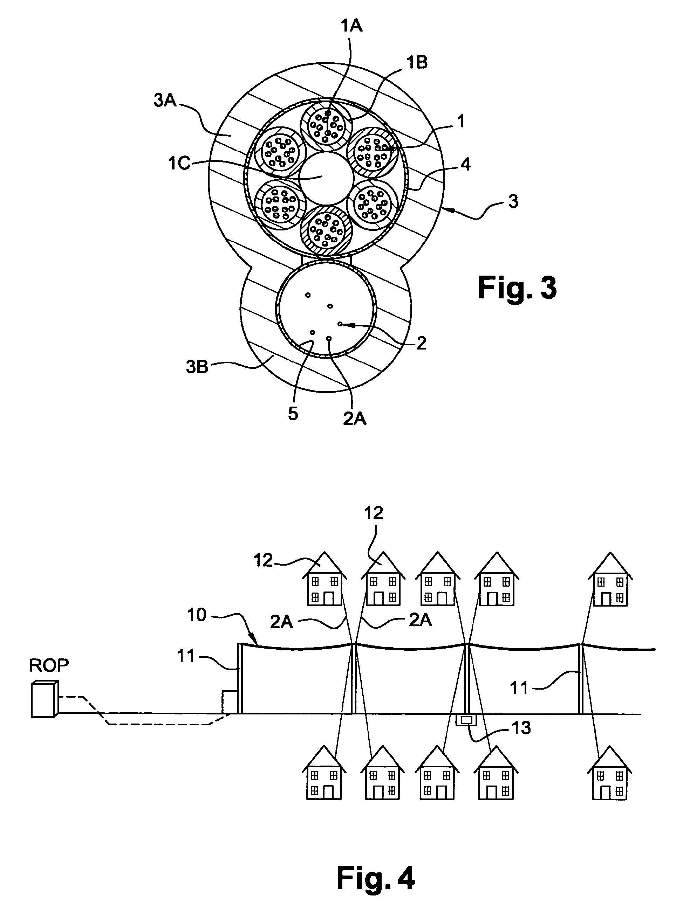

Selon le troisième mode de réalisation représenté sur la figure 3, les deux sous-enveloppes 3A, 3B sont partiellement ouvertes longitudinalement et directement reliées à leur ouverture, la première sous-enveloppe 3A présentant sur sa face interne un écran fermé 4, de préférence de fibres d'aramide.

Chaque fibre optique de raccordement 2A peut être contenue dans un tube en polymère et l'ensemble de ces tubes être supporté par un jonc central de maintien mécanique de préférence de résine renforcé de fibres comme représenté sur la figure 1 ou être disposée de façon libre dans la seconde sous-enveloppe 3B comme illustré.

De préférence, elles sont toutes contenues dans un tube 5 en polymère.

La figure 4 est une vue schématique illustrant des raccordements à un réseau général.

Connecté au réseau général, un câble aérien 10 selon l'invention est supporté par des pylones 11 et, à ces pylones, sont réalisés des raccordements à des abonnés 12, par extraction d'une fibre optique 2A sélectionnée de la seconde sous-enveloppe 3B. Le câble primaire 1 fait office de support mécanique entre deux pylones. L'installation peut comporter également des trous d'homme 13 où sont connectés le câble optique principal 1 et au moins une fibre optique de raccordement 2.

## Revendications

1. Câble comprenant un câble optique primaire (1) comprenant au moins un module de fibres optiques (1A), constitué d'un élément central de support mécanique (1C) entouré d'une pluralité de tubes (1B) contenant chacun un module de fibres optiques (1A), au moins une fibre optique dite de raccordement (2) et une enveloppe de protection (3) entourant ledit câble primaire (1) et ladite fibre optique (2), ladite enveloppe de protection (3) étant constitué de deux sous-enveloppes, dont une première sous-enveloppe (3A) contient ledit câble optique primaire (1) et la seconde sous-enveloppe (3B) contient ladite fibre optique de raccordement (2), ledit câble optique étant un câble optique dit primaire comprenant une pluralité de modules de fibres optiques (1A) de connexion à un réseau général et le câble comportant dans la seconde sous-enveloppe (3B) une pluralité de fibres optiques (2) de raccordement d'abonnés audit câble primaire, **caractérisé en ce que** lesdites deux sous-enveloppes (3A, 3B) sont partiellement ouvertes longitudinalement et directement reliées à leur ouverture, la première sous-enveloppe (3A) présentant sur sa face interne un écran fermé (4).

2. Câble selon la revendication précédente, **caractérisé en ce que** ledit écran est en fibres d'aramide (4).

3. Câble selon l'une des revendications précédentes, **caractérisé en ce que** la dite fibre optique de raccordement (2A) est contenue dans un tube (2B).

## Patentansprüche

1. Kabel, umfassend ein primäres Lichtleitkabel (1), das mindestens ein Lichtleitfasermodul (1A) umfasst, gebildet von einem zentralen mechanischen Stützelement (1C), umgeben von einer Vielzahl von Rohren (1B), von denen jedes ein Lichtleitfasermodul (1A) enthält, wobei mindestens eine Verbindungs-Lichtleitfaser (2) und eine Schutzhülle (3) das primäre Kabel (1) und die Lichtleitfaser (2) umgeben, wobei die Schutzhülle (3) von zwei Unterhüllen gebildet ist, von denen eine erste Unterhülle (3A) das primäre Lichtleitkabel (1) enthält und die zweite Unterhülle (3B) die Verbindungs-Lichtleitfaser (2) enthält, wobei das Lichtleitkabel ein primäres Lichtleitkabel ist, das eine Vielzahl von Anschluss-Lichtleitfasermodulen (1A) an ein allgemeines Netz umfasst und das Kabel in der zweiten Unterhülle (3B) eine Vielzahl von Verbindungs-Lichtleitfasern (2) von Abonnenten an das primäre Kabels aufweist, **dadurch gekennzeichnet, dass** die beiden Unterhüllen (3A, 3B) längs teilweise offen und direkt an ihrer Öffnung verbunden sind, wobei die erste Unterhülle (3A) auf ihrer Innenfläche eine geschlossene Abschirmung (4) aufweist.

2. Kabel nach vorangehendem Anspruch, **dadurch gekennzeichnet, dass** die Abschirmung aus Aramidfaser ist (4).

3. Kabel nach einem der vorangehenden Ansprüche, **dadurch gekennzeichnet, dass** die Verbindungs-Lichtleitfaser (2A) in einem Rohr (2B) enthalten ist.

## Claims

1. A cable comprising a primary optical cable (1) comprising at least one fiber-optic module (1A), made up of a central mechanical support element (1C) surrounded by a plurality of tubes (1B) each containing a fiber-optic module (1A), at least one so-called connecting optical fiber (2) and a protective envelope (3) surrounding said primary cable (1) and said optical fiber (2), said protective envelope (3) being made up of two sub-envelopes, whereof a first sub-envelope (3A) contains said primary optical cable (1) and the second sub-envelope (3B) contains said optical connecting fiber (2), said optical cable being a so-called primary optical cable comprising a plurality of fiber-optic modules (1A) for connecting to a general network and the cable including, in the second sub-envelope (3B), a plurality of optical fibers (2) for subscriber connection to said primary cable, **characterized in that** said two sub-envelopes (3A, 3B) are partially longitudinally open and directly connected at their opening, the first sub-envelope (3A) having a closed screen (4) on its inner face.

2. The cable according to the preceding claim, **characterized in that** said screen is made from aramid fibers (4).

3. The cable according to one of the preceding claims, **characterized in that** said optical connecting fiber (2A) is contained in a tube (2B) .
